(19) Europäisches Patentamt
European Patent Office
Office européen des brevets

(11) EP 1 176 660 A2

(12) EUROPEAN PATENT APPLICATION

(43) Date of publication:
30.01.2002 Bulletin 2002/05

(51) Int Cl.⁷: H01M 10/40, H01M 2/16

(21) Application number: 01118032.0

(22) Date of filing: 25.07.2001

(84) Designated Contracting States:
AT BE CH CY DE DK ES FI FR GB GR IE IT LI LU
MC NL PT SE TR
Designated Extension States:
AL LT LV MK RO SI

(30) Priority: 25.07.2000 JP 2000224468

(71) Applicant: Japan Storage Battery Company
Limited
Minami-ku Kyoto-shi Kyoto (JP)

(72) Inventor: Segawa, Masazumi,
c/oJapan Storage Battery Co. Ltd
Kyoto-shi, Kyoto (JP)

(74) Representative:
Grünecker, Kinkeldey, Stockmair &
Schwanhäusser Anwaltssozietät
Maximilianstrasse 58
80538 München (DE)

(54) **Non-Aqueous electrolyte secondary battery**

(57) The non-aqueous electrolyte secondary battery of the invention comprises the following elements. The non-aqueous electrolyte secondary battery comprises a positive electrode comprising a positive active material, a negative electrode comprising a negative active material, and a porous polymer electrolyte interposed therebetween. The positive electrode, the negative electrode and the polymer electrolyte are fixed to each other. In the non-aqueous electrolyte secondary battery, there is no gap between the electrodes and the porous polymer electrolyte layer. In this arrangement, the migration of lithium ion can be conducted extremely smoothly, giving an excellent high rate discharge performance. Further, a high safety can be provided when the battery is overcharged. It is further preferred that the positive electrode and/or negative electrode comprise therein a polymer which constitutes the polymer electrolyte. The incorporation of a porous polymer in the interior of the electrodes makes it possible to improve the cycle life performance of the battery.

FIG. 8A

**Description**

FIELD OF THE INVENTION

The present invention relates to a non-aqueous electrolyte secondary battery.

BACKGROUND ART

A non-aqueous electrolyte secondary battery which is now commercially available comprises a positive electrode containing a composite oxide of a transition metal such as lithium cobalt oxide, a negative electrode containing a carbon-based material such as graphite, a separator made of polyethylene, polypropylene or the like, and an organic electrolyte solution having a lithium salt such as $LiPF_6$ dissolved in a mixed solvent containing a carbonic acid ester such as ethylene carbonate. In an attempt to improve the safety of such a non-aqueous electrolyte secondary battery, it has been practiced to use a less chemically reactive solid polymer electrolyte instead of combustible organic electrolyte solution.

However, such a solid polymer electrolyte is disadvantageous in that it has a low ionic conductivity and thus provides inferior charge and discharge performance at high rate.

In an attempt to solve this problem, it has recently been practiced to use a polymer electrolyte wet or swollen with an organic electrolyte solution for the purpose of an increase of ionic conductivity. It has been also attempted to enhance the rate of diffusion of lithium ion. It has been proposed to use a porous polymer electrolyte as a separator for the purpose of preparing a battery showed excellent high rate charge and discharge performance and safety as disclosed in JP-A-8-195220 and JP-A-9-259923 (The term "JP-A" as used herein means an "unexamined published Japanese patent application").

The porous polymer electrolyte thus proposed comprises a polymer having ionic conductivity (e.g., poly(ethylene oxide)) and having numerous pores formed therein and an electrolyte solution retained in the pores. In this arrangement having an electrolyte solution retained in the pores of a polymer, the rate of diffusion of lithium ion in polymer electrolyte can be enhanced, making it possible to improve the high rate discharge performance of the battery. Further, the porous polymer electrolyte has no electronic conductivity and thus acts also as the conventional microporous separator made of polypropylene.

However, another problem arises that even if this porous polymer electrolyte is used, the battery shows a remarkable drop of discharge capacity when subjected to high rate discharge. This is due to the gap between the porous polymer electrolyte and the positive electrode and between the porous polymer electrolyte and the negative electrode, which inhibits the movement of lithium ion.

The non-aqueous electrolyte secondary battery comprising a porous polymer electrolyte also can hardly be protected against remarkable temperature rise in the battery during overcharging which is likely to occur when the charger is out of order.

It is therefore an objective of the present invention to improve the high rate discharge performance of a non-aqueous electrolyte secondary battery and secure further safety of a non-aqueous electrolyte secondary battery for overcharge.

SUMMARY OF THE INVENTION

The non-aqueous electrolyte secondary battery of the invention comprises the following elements. The non-aqueous electrolyte secondary battery of the invention comprises a positive electrode comprising a positive active material, a negative electrode comprising a negative active material, and a porous polymer electrolyte interposed therebetween. The positive electrode, the negative electrode, and the polymer electrolyte are kept fixed to each other.

In this non-aqueous electrolyte secondary battery, the electrodes and the porous polymer electrolyte are fixed to each other, giving no gap therebetween. In this arrangement, the movement of lithium ion can be conducted extremely smoothly, giving an excellent high rate discharge performance. The phrase "the movement of lithium ion" means the migration of lithium ion, diffusion of lithium ion and convection of lithium ion.

The foregoing non-aqueous electrolyte secondary battery exhibits a high safety for overcharge. This is attributed to the following reason. When the battery is overcharged, gas is produced by the decomposition of the electrolyte solution. Since this reaction is an exothermic reaction, the temperature in the battery rises, causing evaporation of the unreacted electrolyte solution.

Further, this exothermic reaction causes some chemical reactions successively with the rise of temperature in the battery. As a result, the temperature in the battery further rises, accelerating the evaporation of the electrolyte solution. Moreover, some of these chemical reactions are accompanied by the production of gas. The gas thus produced tends to expand the laminated electricity-generating elements. However, since the electricity-generating element is pressed by the battery case, the resulting force is applied to and breaks the positive electrode or the negative electrode. In this case, the resulting force causes the electrodes to pierce the separator, causing shortcircuiting that leads to the passage of large amount of current and hence a sudden rise of temperature in the battery. This results in fuming, ignition and rupture of battery case.

In order to solve this problem, the positive electrode, the negative electrode and the porous polymer electrolyte are kept fixed to each other in the present invention. In this arrangement, the buckling of the electrodes accompanying the production of gas can be inhibited. As a result, no shortcircuiting occurs even when the battery is overcharged. Thus, safety of the battery of the invention is improved.

Further, the positive electrode and/or the negative electrode preferably comprises therein a polymer which is the same polymer with that constitutes the polymer electrolyte. This is because the provision of a polymer electrolyte in the interior of the electrodes makes it possible to improve the cycle life performance of the battery. This is attributed to the fact that the polymer electrolyte provided in the interior of the electrodes acts as a binder that inhibits the decline of bond strength between active material particles and between active material particles and current collector after cycling. Further, when charge and discharge are repeated, the volume expansion and shrinkage of the electrodes are repeated, giving a tendency that the electrolyte solution moves to zones outside the electrodes. However, in the arrangement of the invention that a polymer electrolyte is provided in the interior of the electrodes, the polymer electrolyte tends to retain an electrolyte solution therein fairly, causing the electrolyte solution to be distributed in the pores of the electrodes even after cycles, hence improving the cycle life performance of the battery. In the case where the polymer electrolyte provided in the interior of the electrodes is porous, the uniform distribution of the electrolyte solution in the interior of the electrodes after cycling can be particularly kept, making it possible to suppress the decrease of cycle life performance of the battery in particular.

Further, the non-aqueous electrolyte secondary battery comprising a polymer electrolyte provided in the interior of the electrodes and having the positive electrode, the negative electrode and the porous polymer electrolyte interposed therebetween which are fixed to each other delivers superior discharge capacity after cycles even when the amount of the electrolyte solution is reduced. This is because this arrangement makes it possible to distribute the electrolyte solution uniformly in the electricity-generating element, resulting in the prevention of the deposition of metallic lithium accompanying cycling. Hence, decrease of cycle life performance is suppressed.

The non-aqueous electrolyte secondary battery according to the invention may comprise the following elements. In other words, the non-aqueous electrolyte secondary battery according to the invention comprises a positive electrode comprising a positive active material, a negative electrode comprising a negative active material, and a separator which is interposed therebetween and which has a porous polymer electrolyte on both sides thereof. The positive electrode, the negative electrode, and the porous polymer electrolyte are kept fixed to each other.

This arrangement also makes it possible to improve the high rate discharge performance of the battery, improve safety of the battery for overcharge and improve the cycle life performance of the battery.

The non-aqueous electrolyte secondary battery of the invention can be prepared by a process for the preparation of a non-aqueous electrolyte secondary battery comprising the following steps. A positive electrode containing a positive active material and a negative electrode containing a negative active material are laminated on each other with a porous polymer provided interposed therebetween to form an electricity-generating element (electricity-generating element assembly step). An electrolyte solution is then injected into the electricity-generating element to make the porous polymer to be a polymer electrolyte (electrolyte solution injection step). The polymer electrolyte of the electricity-generating element is heated to melt the polymer electrolyte (heating step).

In accordance with this preparation process, a non-aqueous electrolyte secondary battery having no gap between the electrodes and the porous polymer electrolyte can be prepared.

Alternatively, the non-aqueous electrolyte secondary battery of the invention can be prepared by a process for the preparation of a non-aqueous electrolyte secondary battery comprising the following steps. A positive electrode containing a positive active material and/or a negative electrode containing a negative active material is dipped in a solution having a polymer dissolved in a first solvent so that the positive electrode and/or the negative electrode is impregnated with the polymer solution (polymer solution dipping step). The positive electrode and/or the negative electrode is then dipped in a second solvent compatible with a first solvent in the solution so that the first solvent is replaced by the second solvent. Thereafter, the second solvent is removed to form a porous polymer (porous polymer forming step). The positive electrode and the negative electrode are then laminated on each other with the porous polymer provided interposed therebetween (electricity-generating element assembly step). An electrolyte solution is then injected into the electricity-generating element to make the porous polymer to be a polymer electrolyte (electrolyte solution injecting step). The polymer electrolyte of the electricity-generating element is then heated to melt the polymer electrolyte (heating step).

In accordance with this process, a polymer which is the same polymer with that constitutes the polymer electrolyte can be provided in the interior of the positive electrode and/or the negative electrode.

Still alternatively, the non-aqueous electrolyte secondary battery of the invention can be prepared by a process for the preparation of a non-aqueous electrolyte secondary battery comprising the following steps. A positive electrode containing a positive active material and/or a negative electrode containing a negative active material is dipped in a solution having a polymer dissolved in a first solvent so that the positive electrode and/or the negative electrode is impregnated with the polymer solution (polymer solution dipping step). The polymer solution attached to the surface of the positive electrode and/or the negative electrode is then removed (polymer solution removing step). The positive electrode and/or the negative electrode is then dipped in a second solvent compatible with a first solvent in the solution so that the first solvent is replaced by the second solvent. Thereafter, the second solvent is removed to form a porous polymer (porous polymer forming step). The positive electrode and/or negative electrode containing a porous polymer is then pressed (pressing step). The positive electrode and the negative electrode are then laminated on each other with a porous polymer film provided interposed therebetween (electricity-generating element assembly step). An electrolyte solution is then injected into the electricity-generating element to make the porous polymer film to a polymer electrolyte film (electrolyte solution injecting step). The polymer electrolyte film of the electricity-generating element is then heated to melt the polymer electrolyte film (heating step).

This process involves the removal of the polymer solution attached to the surface of the positive electrode and/or the negative electrode and the subsequent pressing of the positive electrode and/or the negative electrode, making it possible to enhance the energy density of the battery.

BRIEF DESCRIPTION OF THE DRAWINGS

Fig. 1 is an enlarged sectional view of a positive electrode;
Fig. 2 is an enlarged sectional view of a positive electrode impregnated with a polymer solution;
Fig. 3 is an enlarged sectional view of a positive electrode from which the polymer solution has been removed;
Fig. 4 is an enlarged sectional view of a positive electrode having a porous polymer formed therein;
Fig. 5 is an enlarged sectional view of a positive electrode which has been pressed;
Fig. 6 is an enlarged sectional view of a negative electrode;
Fig. 7 is an enlarged sectional view of a negative electrode which has been pressed;
Fig. 8A is a sectional view illustrating the structure of an electricity-generating element according to the first embodiment of implication of the present invention;
Fig. 8B is a sectional view illustrating the structure of an electricity-generating element according to the second embodiment of implication of the present invention;
Fig. 9 is a sectional view illustrating the structure of a non-aqueous electrolyte secondary battery according to the first and second embodiments of implication of the present invention;
Fig. 10 is a perspective view illustrating the assembly of a non-aqueous electrolyte secondary battery;
Fig. 11 is a perspective view of a non-aqueous electrolyte secondary battery;

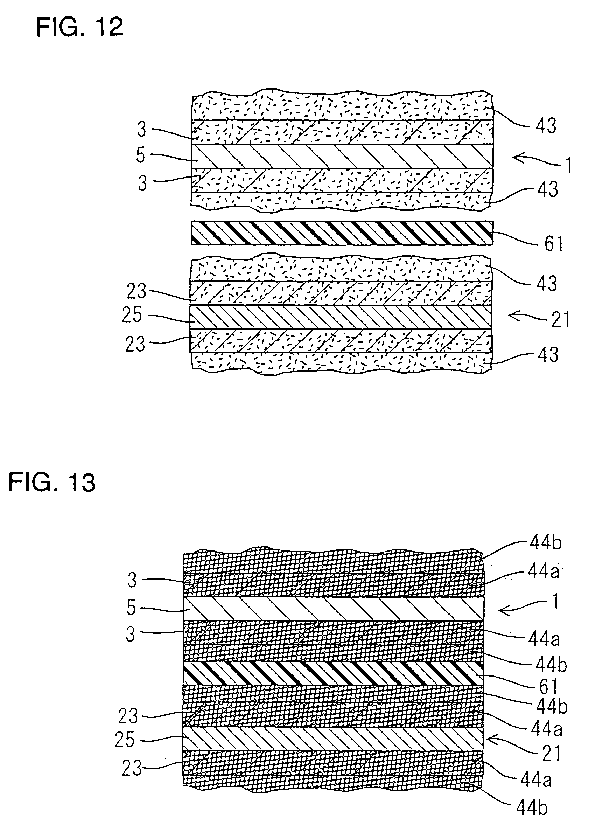

Fig. 12 is a sectional view illustrating the structure of an electricity-generating element according to the third embodiment of implication of the present invention;
Fig. 13 is a sectional view illustrating the structure of a non-aqueous electrolyte secondary battery according to the third embodiment of implication of the present invention;
Fig. 14 is a sectional view illustrating the structure of an electricity-generating element according to the fourth embodiment of implication of the present invention;
Fig. 15 is a sectional view illustrating the structure of a non-aqueous electrolyte secondary battery according to the fourth embodiment of implication of the present invention;
Fig. 16 is a sectional view illustrating the structure of an electricity-generating element according to the fifth embodiment of implication of the present invention;
Fig. 17 is a sectional view illustrating the structure of a non-aqueous electrolyte secondary battery according to the fifth embodiment of implication of the present invention;
Fig. 18 is a sectional view illustrating the structure of an electricity-generating element according to the sixth embodiment of implication of the present invention;
Fig. 19 is a sectional view illustrating the structure of a non-aqueous electrolyte secondary battery according to the sixth embodiment of implication of the present invention;
Fig. 20 is a sectional view illustrating the structure of an electricity-generating element according to Comparative Example I;
Fig. 21 is a sectional view illustrating the structure of a non-aqueous electrolyte secondary battery according to Comparative Example I;
Fig. 22 is a sectional view illustrating the structure of an electricity-generating element according to Comparative Example J;

Fig. 23 is a sectional view illustrating the structure of a non-aqueous electrolyte secondary battery according to Comparative Example J;

Fig. 24 is a graph illustrating the relationship between the dipping time of a non-aqueous electrolyte battery in a water bath and the temperature of surface of the non-aqueous electrolyte battery; and

Fig. 25 is a graph illustrating high rate discharge performance.

Detailed Description of the Invention

The present invention concerns about a non-aqueous electrolyte secondary battery comprising the following elements. In some detail, the non-aqueous electrolyte secondary battery of the invention comprises a positive electrode comprising a positive active material, a negative electrode comprising a negative active material, and a porous polymer electrolyte interposed between the positive electrode and the negative electrode. The positive electrode, the negative electrode, and the polymer electrolyte are kept fixed to each other. The phrase "the positive electrode, the negative electrode, and the polymer electrolyte are kept fixed to each other", the phrase "the positive electrode, the negative electrode, and the polymer electrolyte are fixed to each other", or the like as used in this specification has the same meaning that the positive electrode and the polymer electrolyte are fixed to each other and the negative electrode and the polymer electrolyte are fixed to each other. In the following description, same elements are referred to by using the same reference numbers.

The present invention will be further described hereinafter with reference to some embodiments of the invention shown in figures as examples but the present invention is not limited thereto.

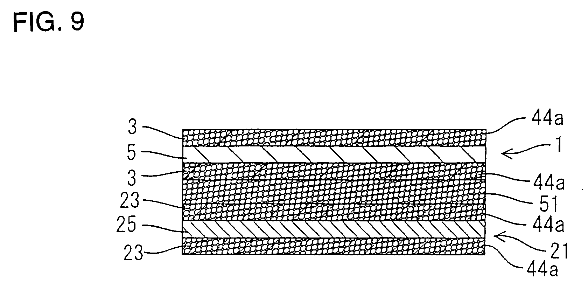

The foregoing arrangement that the positive electrode, the negative electrode, and the polymer electrolyte are kept fixed to each other means that a porous polymer electrolyte film 51 acts as an adhesive layer with which a positive electrode 1 and a negative electrode 21 are bonded or heat-fused to each other, as typically shown in Fig. 9 (e.g., first embodiment of implication of the present invention, second embodiment of implication of the present invention). A part of the porous polymer electrolyte film 51 is also thought to run into the gap between active material particles of electrodes followed by fix of the positive electrode, negative electrode and porous polymer electrolyte, in case where porous polymer electrolyte is soften by heat treatment of the battery.

Accordingly, it is difficult to separate the positive electrode 1, negative electrode 21 and the porous polymer film 51 by the ordinary disassembling way of separation of these elements because each element is fixed to each other. Thus, no gap is provided between the electrode 1, electrode 21 and the porous polymer electrolyte film 51, allowing an extremely smooth movement of lithium ion that gives an excellent high rate discharge performance.

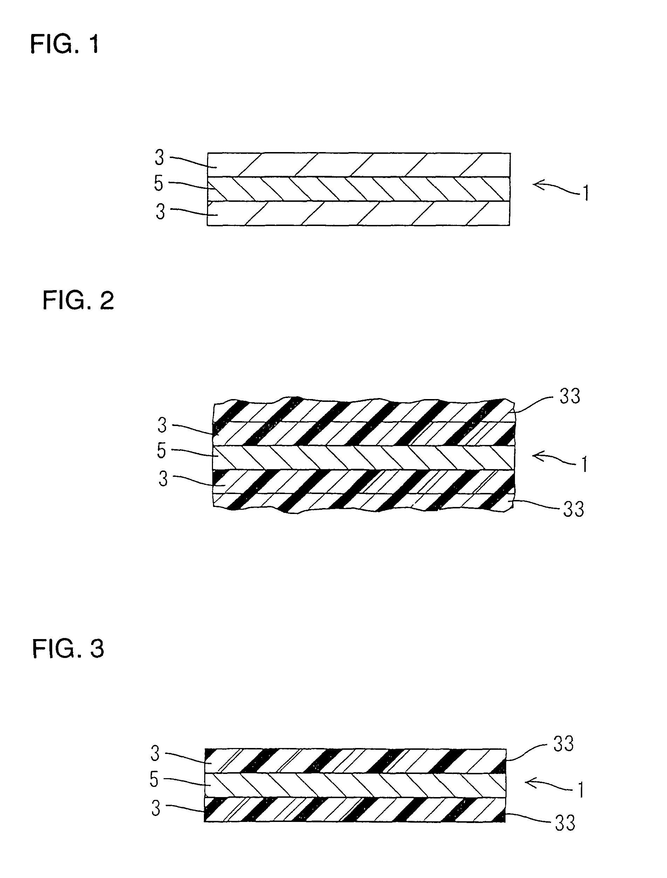

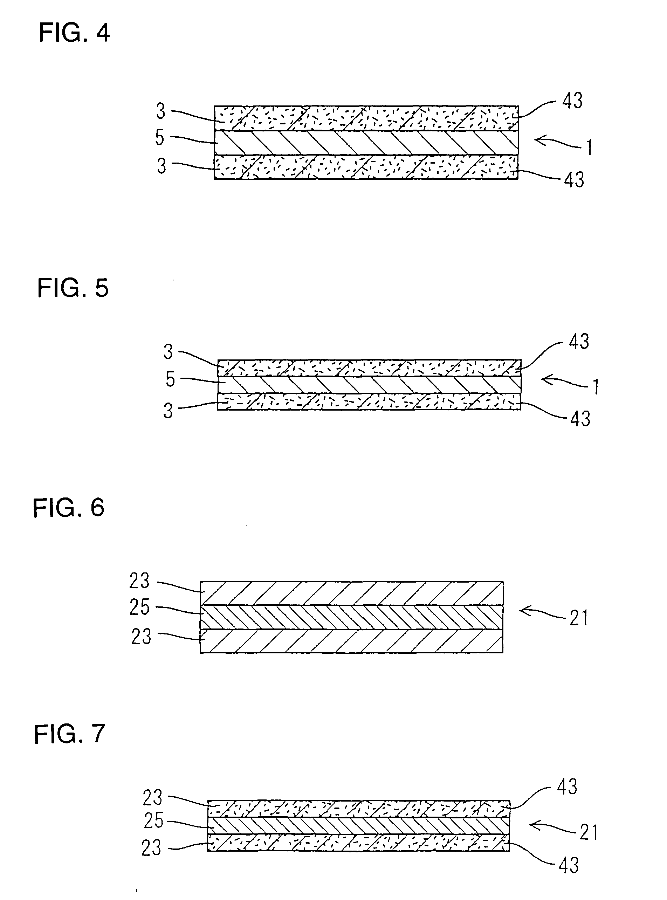

It is further preferable to incorporate the same polymer with that constitutes the porous polymer electrolyte film 51 in the interior of the positive electrode 1 and/or negative electrode 21. Hence, it is preferable that porous polymer is provided continuously from the interior of an electrode to porous polymer electrolyte film 51. The term "interior of the electrodes 1, 21" as used herein is meant to indicate the portion in the electrodes 1, 21 shown in Figs. 1 and 6 which lies in the course from the surface thereof toward the current collectors 5, 25. Fig. 9 indicates that the polymer constituting the porous polymer electrolyte film 51 is incorporated in the interior of the negative electrode 21 and the positive electrode 1. In this arrangement, the movement of lithium ion into the interior of the electrodes can be conducted extremely smoothly, giving an excellent high rate discharge performance.

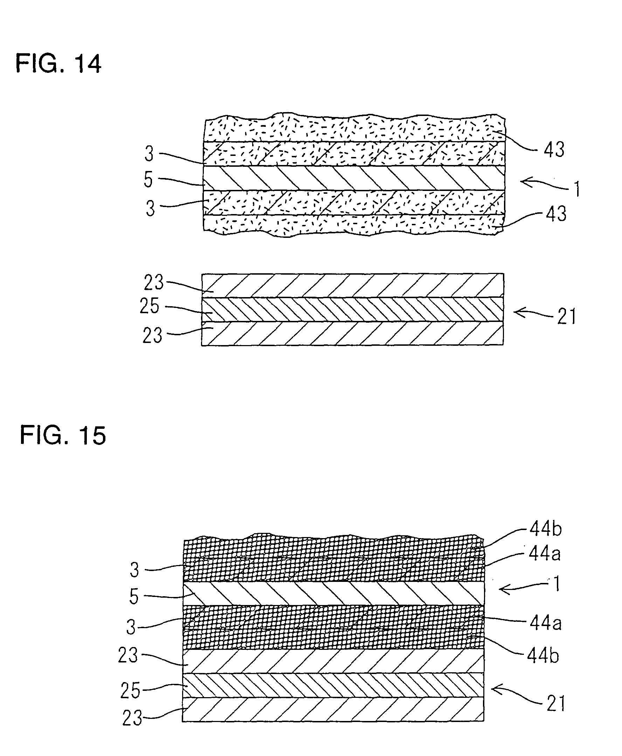

In the case where porous polymer electrolyte film 51 is not provided as shown in Fig. 15, a porous polymer electrolyte 44b on the surface of the electrode acts as an adhesive layer with which the positive electrode 1 and the negative electrode 21 are bonded or heat-fused to each other (fourth embodiment).

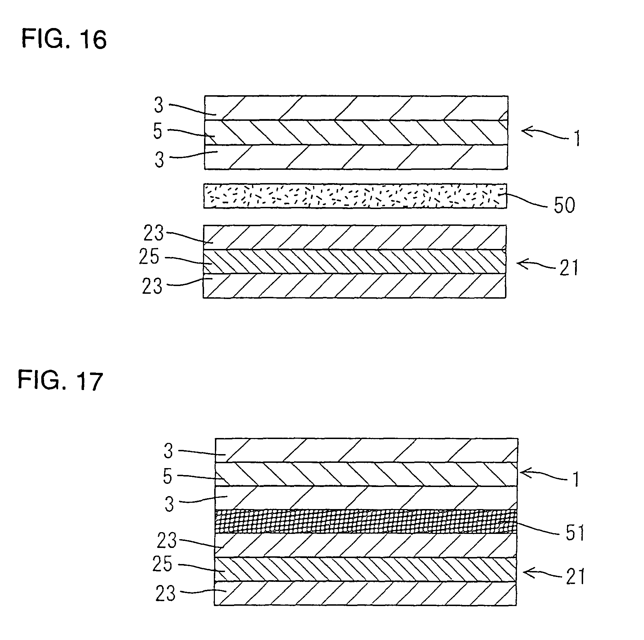

Instead of forming the porous polymer 43 on the positive electrode 1 or negative electrode 21, a porous polymer film prepared on a flat board like a glass substrate. And its polymer film may be interposed between the positive electrode 1 and the negative electrode 21 as shown in Figs. 16 and 17. In this arrangement, too, the porous polymer electrolyte film 51 as a polymer electrolyte acts as an adhesive film with which the positive electrode 1 and the negative electrode 21 are bonded or heat-fused to each other (fifth embodiment).

In the case where the non-aqueous electrolyte secondary battery of the invention is provided with a separator 61, a separator 61 having a porous polymer electrolyte 44b provided on both sides thereof may be provided interposed between the positive electrode 1 and the negative electrode 21 (third embodiment). The positive electrode 1, the negative electrode 21 and the porous polymer electrolyte 44b are kept fixed to each other.

The non-aqueous electrolyte secondary battery of the invention will be further described hereinafter with reference to a process for the preparation thereof.

The positive electrode 1 comprises a mixture of a positive active material, a binder and an electric conductor, and its mixture is retained on both sides of a current collector 5 made of, e.g., aluminum foil having a thickness of, e.g., 20 μm as shown in Fig. 1. The negative electrode 21 comprises a mixture of a negative active material and a binder. And its mixture is retained on both sides of a current collector 25 made of, e.g., copper foil as shown in Fig. 6.

Firstly, a paste obtained by kneading a particulate active material, an electric conductor such as acetylene black, a binder such as poly(vinylidene fluoride) and a dispersing medium such as N-methyl-2-pyrrolidone (NMP) is applied to current collectors 5, 25, and then dried. This procedure is conducted on both sides of the current collectors 5, 25 to prepare a positive electrode 1 and a negative electrode 21.

More specifically, the positive electrode 1 to be incorporated in the battery of the invention is prepared as follows. A paste obtained by kneading a particulate positive active material, an electric conductor such as acetylene black, a binder such as poly(vinylidene fluoride) and a dispersing medium such as NMP is applied to a foil of metal such as aluminum, and then dried. This procedure is conducted on both sides of the metal foil to prepare the positive electrode 1.

As the positive active material, for example, a compound capable of absorbing/releasing lithium ion can be employable. For example, a composite oxide represented by the composition formula $Li_xMO_2$ or $Li_yM_2O_4$ (in which M represents a transition metal, x represents a number of from not smaller than 0 to not greater than 1 ($0 \leqq x \leqq 1$), and y represents a number of from not smaller than 0 to not greater than 2 ($0 \leqq y \leqq 2$)) such as $LiCoO_2$, $LiNiO_2$, $LiMn_2O_4$, and $Li_2Mn_2O_4$ can be used. $MnO_2$, $FeO_2$, $V_2O_5$, $V_6O_{13}$, $TiO_2$ and $TiS_2$, an oxide having tunnel-like pores, a laminar metal chalcogenide, etc. may also be used. Alternatively, an inorganic compound obtained substituting a part of the transition metal M by other elements (e.g., $LiNi_{0.80}Co_{0.20}O_2$ and $LiNi_{0.80}Co_{0.17}Al_{0.03}O_2$) can be used. Further, an organic compound such as electron-conductive polymer (e.g., polyaniline) may be used. The foregoing various active materials may be used in admixture regardless of which they are inorganic or organic.

The negative electrode 21 is prepared as follows. A paste obtained by kneading a particulate negative active material, a binder such as poly(vinylidene fluoride) and a dispersing medium such as NMP is applied to a foil of metal such as copper, and then dried. This procedure is conducted on both sides of the metal foil to prepare the negative electrode 21.

As the negative active material, for example, an alloy of lithium with Al, Si, Pb, Sn, Zn, Cd or the like, composite oxide of transition metal such as $LiFe_2O_3$, transition metal oxide such as $WO_2$ and $MoO_2$, heat-treated product of graphitizable carbon material such as coke, mesocarbon microbead (MCMB), mesophase pitch-based carbon fiber and pyrolysis vapor phase-grown carbon fiber, sintered phenolic resin, polyacrylonitrile-based carbon fiber, pseudoisomeric carbon, heat-treatment product of hardly-graphitizable carbon material such as sintered furfuryl alcohol resin, graphite-based material such as natural graphite, artificial graphite, graphitized MCMB, graphitized mesophase pitch-based carbon fiber and graphite whisker, carbon-based material made of mixture thereof, lithium nitride, metallic lithium or mixture thereof can be employable. Particularly preferred among these negative active materials is carbon-based material.

Subsequently, the positive electrode 1 and the negative electrode 21 are laminated on each other with a porous polymer provided interposed therebetween to form an electricity-generating element.

The process for the preparation of a porous polymer is not specifically limited. For example, a process may be used which comprises impregnating the positive electrode 1 and/or negative electrode 21 with a polymer solution so that the polymer solution is provided on the surface of these electrodes, and then dipping these electrodes in a second solvent compatible with a first solvent in the polymer solution. Another process may be also used which comprises preparing a porous polymer film separately of the surface of positive electrode 1 and/or the negative electrode 21.

The process which comprises impregnating the positive electrode 1 and/or negative electrode 21 with a polymer solution so that the polymer solution is provided on the surface of these electrodes, and then dipping these electrodes in a second solvent compatible with a first solvent in the polymer solution will be described hereinafter.

In accordance with this process, the positive electrode 1 and/or negative electrode 21 is dipped in a solution having a polymer dissolved in a first solvent so that the positive electrode 1 and/or negative electrode 21 is impregnated with a polymer solution 33.

In this manner, the solution 33 having a polymer dissolved therein is incorporated in the pores of the positive electrode 1 and/or negative electrode 21 and provided on the surface of the positive electrode 1 and/or negative electrode 21.

The polymer solution 33 may be provided on either or both of the positive electrode 1 and the negative electrode 21.

The following-description will be made with reference to the case where the positive electrode 1 and negative electrode 21 are impregnated with the polymer solution 33 as an example.

The polymer solution 33 comprises a polymer dissolved in a first solvent. When the positive electrode 1 is dipped in the polymer solution, the polymer solution 33 penetrates into the pores (voids) existed in the interior of the positive electrode 1 (see Fig. 2).

Further, the polymer solution 33 attached to the surface of the positive electrode 1 and/or negative electrode 21 may be removed as shown in Fig. 3 (step of removing polymer solution). In this step, the positive electrode 1 is passed through a doctor blade or a roller having a predetermined width to remove excess polymer solution attached to the surface of the positive electrode 1.

The process which comprises dipping the positive electrode 1 and/or negative electrode 21 in a solution having a polymer dissolved therein so that the positive electrode 1 and/or negative electrode 21 is impregnated with the polymer solution 33 is not specifically limited. In practice, a vacuum impregnation process may be used. Alternatively, a process may be used which comprises application of a polymer solution to the surface of the electrode by a screen printing method, doctor blade method or the like, followed by penetration of the polymer solution into the interior of the electrode by osmotic pressure.

As the polymer to be incorporated in the polymer solution 33 of the invention, a polymer which wets or swells with an organic electrolyte solution followed by the emergency of the conductivity of lithium ion in its polymer itself can be employable. As for such a polymer, poly(vinylidene fluoride) (PVdF), poly(vinyl chloride), polyacrylonitrile, polyether such as poly (ethylene oxide) and poly(propylene oxide), poly(vinylidene chloride), poly(methyl methacrylate), poly (methyl acrylate), poly(vinyl alcohol), polymethacrylonitrile, poly(vinyl acetate), poly(vinyl pyrrolidone), , polybutadiene, polystyrene, polyisoprene, and derivative thereof can be employable. These polymers may be used singly or in admixture.

Alternatively, polymers obtained by the copolymerization of various monomers constituting the foregoing polymers, e.g., vinylidene fluoride/hexafluoropropylene copolymer (P(VdF/HFP)) may be used. These polymers are preferably flexible that can follow the volume expansion and shrinkage of the active material during charge and discharge reaction.

Poly(vinylidene fluoride) and vinylidene fluoride/hexafluoropropylene copolymer are preferable as a material of porous polymer among these polymers or copolymers from the standpoint of handling and ease of preparation of porous polymer .

As the first solvent for dissolving the polymer, there may be used a carbonic ester such as dimethylformamide, propylene carbonate, ethylene carbonate, dimethyl carbonate, diethyl carbonate and ethyl methyl carbonate, an ether such as dimethyl ether, diethyl ether, ethyl methyl ether and tetrahydrofuran, dimethylacetamide, 1-methyl-pyrrolidinon, N-methyl-2-pyrrolidone (NMP) or mixture thereof depending on the material of polymer used.

Subsequently, the positive electrode 1 and/or negative electrode 21 is dipped in a second solvent compatible with a first solvent in the polymer solution 33 so that the first solvent is replaced by the second solvent. Thereafter, the second solvent is removed to form a porous polymer 43 (step of forming a porous polymer).

In this manner, the polymer solution 33 which is impregnated with positive electrode and/or negative electrode becomes a porous polymer 43 (see Fig. 4).

The process using a second solvent is one of phase transition processes and is called wet process. In accordance with this process, the polymer solution is dipped in the second solvent compatible with the first solvent so that the first solvent is extracted. The portion from which the first solvent is removed becomes a pore. Thus, the polymer becomes porous. In accordance with this wet process, A porous polymer prepared by this method consists of cellular morphology with continuous pores. And opening of pores is circular. As the second solvent with which the first solvent can be extracted from the polymer solution, there may be used one compatible with the first solvent used. For example, water, an alcohol, acetone or mixture thereof may be used.

The process for rendering the polymer to be porous is not limited to wet process. For example, a process may be used which comprises spraying a mixture having a polymer dispersed in a solvent that does not dissolve the polymer therein onto the surface of an electrode, and then allowing the solvent to evaporate. In this case, a porous polymer layer made of fine particles is formed on the surface of the electrode. In accordance with this process using a spray, the thickness of the polymer solution to be applied to the surface of the electrode can be varied by adjusting the spraying time. Alternatively, a process for piercing holes in the polymer by irradiation of ultraviolet rays, a process for piercing holes in the polymer by a mechanical means or a phase transition process may be used. The foregoing wet process is preferable among these process because it can form a porous polymer having a porous three-dimensional network structure like cellular morphology.

The porous polymer to be incorporated in the non-aqueous battery of the invention has many pores. The number and size of holes and porosity are not specifically limited. These pores may be discontinuously or continuously. It is preferred that the polymer film has many continuous pores. In the porous polymer electrolyte, lithium ion can diffuse not only in the polymer matrix but also in the electrolyte solution presented in pores of the polymer electrolyte. However, lithium ion can diffuse at a higher rate in the electrolyte solution presented in the pores of porous polymer electrolyte than in the polymer matrix of porous polymer electrolyte. Therefore, if pores are continuous, lithium ion can continuously diffuse through the electrolyte solution presented in the pores of porous polymer electrolyte. The porosity indicates the percentage of volume occupied by the voids made of pores.

In the case where the step of removing the polymer solution 33 attached to the surface of the positive electrode 1 and/or negative electrode 21 (polymer solution removing step) is carried out, it is preferred that the positive electrode and/or negative electrode having a porous polymer be pressed (see Fig. 5). This is because when the positive electrode 1 and/or negative electrode 21 is pressed, the energy density of the battery can be increased.

The negative electrode 21 is similarly prepared (see Fig. 7).

Subsequently, the positive electrode 1 and the negative electrode 21 are laminated on each other with a porous polymer provided interposed therebetween to form an electricity-generating element (electricity-generating element assembly step). Thereafter, an electrolyte solution is injected into the electricity-generating element to render the porous polymer to be a polymer electrolyte (electrolyte solution injecting step).

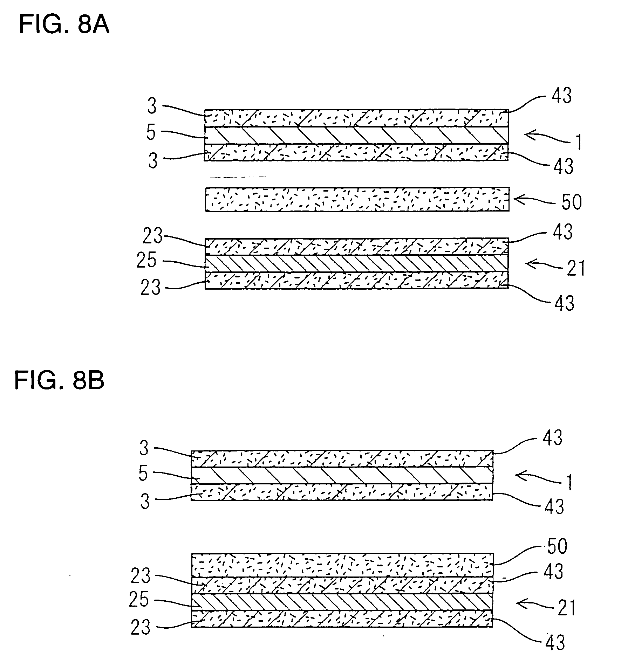

For example, the positive electrode 1 and the negative electrode 21 are laminated on each other with a porous polymer 43 provided interposed therebetween as shown in Figs. 14 and 15 to form an electricity-generating element. An electrolyte solution is then injected into the electricity-generating element to convert the polymer 43 to polymer electrolyte 44a, 44b (fourth embodiment). As shown in Figs. 8A, and 9, the positive electrode 1 and the negative electrode 21 are laminated on each other with a porous polymer film 50 provided interposed therebetween to form an electricity-generating element. An electrolyte solution is then injected into the electricity-generating element to convert the porous polymer film 50 to a polymer electrolyte film 51 (first embodiment).

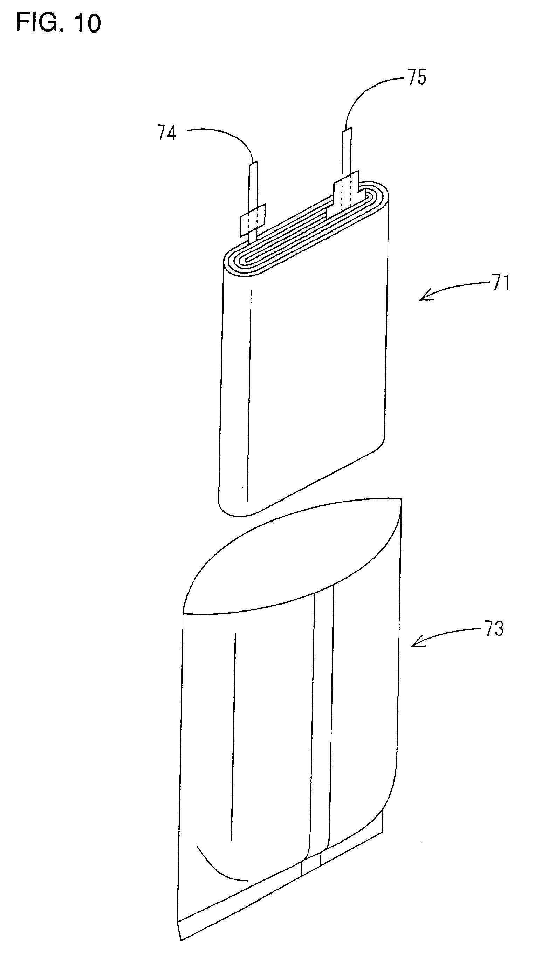

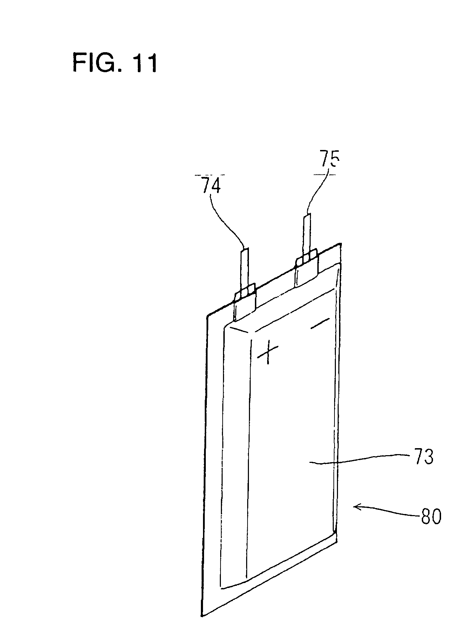

In some detail, an electricity-generating element 71 thus prepared is then inserted into a battery case 73 (see Fig. 10). Thereafter, an electrolyte solution is injected into the battery case 73. The battery case 73 is then sealed to obtain a non-aqueous electrolyte secondary battery 80 (see Fig. 11). The porous polymer 43 or the porous polymer film 50 wetted of swelled with electrolyte solution exhibit ionic conductivity of lithium ion. Thus, a polymer electrolyte 44a in the interior of the electrode, a polymer electrolyte 44b on the surface of the electrode and a polymer electrolyte film 51 are provided.

The porous polymer film 50 can be prepared by a process which comprises applying a polymer solution having P(VdF/HFP) dissolved in NMP to a glass plate by means of a doctor blade, and then dipping the glass plate coated with a polymer solution in de-ionized water containing ethanol. The porous polymer film thus prepared is then interposed between the positive electrode 1 and the negative electrode 21 as shown in Fig. 8A (first embodiment).

Alternatively, the porous polymer film 50 can be prepared by a process which comprises applying a polymer solution to the surface of electrodes 1, 21 as shown in Fig. 8B (second embodiment).

The thickness of a porous polymer film 50 is requested to be thick enough to be avoided short-circuiting between the positive electrode 1 and negative electrode 21 in the case where any other separator is not interposed between positive electrode and negative electrode, such as the first or second embodiment. The thickness of a porous polymer film 50 is preferably, e.g., from 8 $\mu$m to 35 $\mu$m.

Further, the electricity-generating element assembly step may comprise laminating the positive electrode 1 and the negative electrode 21 on each other with a separator 61 provided interposed therebetween to form an electricity-generating element having the separator 61 provided between the positive electrode 1 and the negative electrode 21 with the porous polymer 43 interposed between the positive electrode 1 and the separator 61 and between negative electrode 21 and the separator 61 (third embodiment). As a separator 61, a microporous separator comprising numerous micropores provided in an insulating film such as polypropylene and polyethylene or nonwoven fabric are employable. A big difference between the separator 61 and the porous polymer electrolyte film is that the separator 61 doesn't exhibit ionic conductivity in its polymer itself.

As the solvent to be used in the electrolyte solution for the non-aqueous electrolyte secondary battery of the invention, for example, a polar solvent such as ethylene carbonate, dimethyl carbonate, diethyl carbonate, ethyl methyl carbonate, $\gamma$-butyrolactone, sulfolane, dimethyl sulfoxide, acetonitrile, dimethylformamide, dimethylacetamide, 1,2-dimethoxyethane, 1,2-diethoxyethane, tetrahydrofuran, 2-methyltetrahydrofuran, dioxolane and methyl acetate or mixture thereof can be used.

As the salt to be incorporated in the electrolyte solution, for example, a lithium salt such as $LiPF_6$, $LiBF_4$, $LiAsF_6$, $LiClO_4$, LiSCN, LiI, $LiCF_3SO_3$, LiCl, LiBr and $LiCF_3CO_2$ or mixture thereof can be employable.

The amount of the electrolyte solution to be injected is preferably from 10% to 120% of the sum of the volume of the pores in the positive electrode 1 (the true volume of the porous polymer is subtracted from the volume of the pores in the positive-electrode in the case where the porous polymer electrolyte is incorporated in the interior of the positive electrode), the negative electrode 21 (the true volume of the porous polymer is subtracted from the volume of the pores in the negative electrode in the case where the porous polymer electrolyte is incorporated in the interior of the negative electrode), the porous polymer 43 present on the surface of the electrode, the porous polymer film 50 and the microporous separator 61 (excluded in the case where the microporous separator 61 is not used). In the case where porous polymer electrolyte is provided in the interior of the electrodes and in the case where a positive electrode, a negative electrode and a porous polymer electrolyte provided interposed therebetween are fixed to each other, the non-aqueous electrolyte secondary battery shows superior cycle life performance even if the amount of the electrolyte solution is from 80% to 100% of the sum of volume of pores in the elements.

The battery case 73 is not specifically limited. For example, a rectangular case, a cylindrical case, or an aluminum laminated bag covered with resin can be employable.

Thereafter, the polymer electrolyte 44b on the surface of the electrodes and the polymer electrolyte film 51 are heated to melt them (heating step). The non-aqueous electrolyte secondary battery 80 is heated to a temperature of not lower than 100°C so that the electricity-generating element 71 is fixed and integrated. Accordingly, when the non-aqueous electrolyte secondary battery 80 is disassembled, the electricity-generating element 71 is found to be kept spirally-wound. It is also found that it is extremely difficult to separate and extend the positive electrode 1 and the negative electrode 21 from the electricity-generating element 71. In this case, if the polymer electrolyte film 51 is provided, it is preferred that the polymer electrolyte 44a in the interior of the electrodes and the polymer electrolyte film 51 are disposed continuously (see Fig. 9).

Since it is likely that the electrolyte solution cannot be uniformly distributed in the pores of the electricity-generating element 71 just after the injection of the electrolyte solution, it is preferred that the battery be charged prior to heating to allow the electrolyte solution to be uniformly distributed in the electricity-generating element 71. More preferably, the battery is subjected to several cycles of charge and discharge at a low rate prior to heat treatment.

This is because that, when the electrolyte solution is uniformly dispersed in the electricity-generating element 71, the melting point of the polymer electrolytes is decreased, making it possible to fix the electricity-generating element 71 even if the heating temperature is low. By lowering the heating temperature, the expansion of the battery case 73 due to the evaporation of the electrolyte solution can be suppressed when the temperature of the non-aqueous electrolyte secondary battery 80 rises.

The heating temperature is preferably adjusted that electricity-generating element 71 be fixed in a short time of heat by melting the polymer electrolyte 44b and the polymer electrolyte film 51. However, since prolonged heating at high temperature causes the evaporation and decomposition of the electrolyte solution which is comprised in the polymer electrolyte 44a, the polymer electrolyte 44b, the polymer electrolyte film 51 and in the interior of electrodes, the reaction of the electrolyte solution with the electrodes 1, 21 resulting in the production of gas. The heating temperature is therefore preferably not higher than the boiling point of the electrolyte solution.

For example, if the polymer is a poly(vinylidene fluoride) or vinylidene fluoride/hexafluoropropylene copolymer, the heating temperature is preferably from not lower than 100°C to not higher than 150°C. Heretofore, aging of the non-aqueous electrolyte secondary battery 80 at a temperature of about 60°C has been attempted in order to increase the thickness of the film formed on the surface of the negative electrode 21. In accordance with this process, an increase of the thickness of the film increases the internal resistance of the battery, resulting in the improvement of safety of the battery. However, the positive electrode 1, the negative electrode 21 and the polymer electrolyte film 51 cannot be fixed to each other by this conventional method. Therefore, it is impossible to improve the high rate discharge performance, cycle life performance and safety of the battery by this conventional aging method.

The melting point of poly(vinylidene fluoride) or vinylidene fluoride/hexafluoropropylene copolymer is not lower than 130°C from the results of differential scanning calorimetry. However, the melting point of them are decreased by containing electrolyte solution. Accordingly, when heat treatment is carried out at a temperature of higher than 100°C, the polymer electrolyte film 51 can be slightly melted on the surface thereof. As a result, the positive electrode 1, the negative electrode 21 and the polymer electrolyte film 51 can be fixed to each other, giving no gap between the electrodes 1, 21 and the polymer electrolyte film 51.

More preferably, heating is conducted at discharged state of the battery (i.e., with few lithium ions absorbed by the negative electrode). The reason for this is as follows. When the battery is exposed to high temperature, reaction of $Li_xC_6$ of negative electrode with the electrolyte solution occurs. As the value x in $Li_xC_6$ increases, the amount of heat generated by this reaction increases. The more the battery is in charged state, the more is the value x. Therefore, when the battery is heated in discharged state, the resulting heat generation is reduced resulting in safety. Heating is also preferably conducted at a temperature such that no other reactions occur without the melting of the polymer electrolyte film 51.

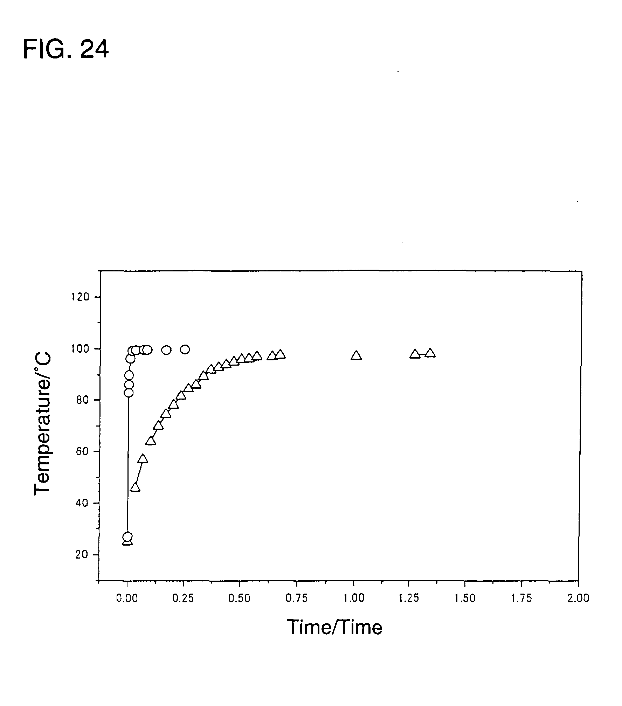

As a method for heating the non-aqueous electrolyte secondary battery 80, a method which comprises heating the non-aqueous electrolyte secondary battery 80 disposed in a high temperature oven or a method which comprises immersing the non-aqueous electrolyte secondary battery 80 in a water bath, oil bath or the like can be employable. The method which comprises immersing the non-aqueous electrolyte secondary battery 80 in a water bath, oil bath or the like is preferable among these methods. This is because that heating in a water bath makes it possible to heat the non-aqueous electrolyte secondary battery 80 to a desired temperature in an extremely short period of time as shown by the symbol ○ in Fig. 24 as compared with the method which comprises heating the non-aqueous electrolyte secondary battery 80 disposed in a constant temperature oven as shown by the symbol △ in Fig. 24. Therefore, this method is extremely suitable for mass production.

Further, it is not necessary to heat the entire nonaqueous electrolyte secondary battery 80. In the case where electrode terminals 74, 75 extending out of the battery case 73, electricity-generating element 71 is fixed by heating these electrode terminals 74, 75. In this case, the battery is heated by the irradiation of ultraviolet rays or infrared rays to electrode terminals 74, 75 or heat-pressing of electrode terminals 74, 75.

In order to inhibit the expansion or distortion of the battery case 73 due to the expansion of gas remaining in the case and evaporation and decomposition of the electrolyte solution when a rectangular battery case or an aluminum laminated case covered with resin is used, heating may be conducted with the non-aqueous electrolyte secondary battery 80 being clamped between iron plates or the like. In the case where heating causes the production of gas resulting in distortion of the battery case 73 or the expansion of gas accompanied by the expansion or distortion of the battery case 73, the following action is preferably taken. In other words, it is preferred that the battery case 73 is renewed or the sealing portion is opened to release produced gas and then sealed again.

In accordance with this heating step, the positive electrode 1, the negative electrode 21 and the polymer electrolyte film 51 can be fixed to each other, giving no gap between the electrodes 1, 21 and the polymer electrolyte film 51. Further, the polymer electrolyte 44a in the interior of the electrodes and the polymer electrolyte film 51 are continuously arranged. While the foregoing description has been made with reference to the case where the positive electrode 1 and the negative electrode 21 are dipped in a polymer solution 33, the polymer solution 33 is removed from the surface thereof, electrodes are pressed after the formation of a porous polymer 43, and a polymer film 50 is provided interposed between the positive electrode 1 and the negative electrode 21, the non-aqueous electrolyte secondary battery 80 may be prepared as follows.

For example, only one of the positive electrode and the negative electrode 21 may be dipped in the polymer solution 33 as shown in Figs. 14 and 15 (Fourth embodiment). Thereafter, the polymer solution may or may not be removed from the surface of the positive electrode 1 or the negative electrode 21. These electrodes may or may not be pressed before being dipped in the polymer solution 33. The polymer electrolyte film 51 may or may not be interposed between the positive electrode 1 and the negative electrode 21 because short circuit is inhibited by the porous polymer layer prepared on the surface of an electrode in case of the fourth embodiment.

As shown in Figs. 16 and 17, the polymer film 50 may be formed on a glass plate or the like which is then interposed between the positive electrode 1 and the negative electrode 21 instead of forming the porous polymer 43 on the positive electrode 1 or the negative electrode 21 (Fifth embodiment). In this case, a non-aqueous electrolyte secondary battery 80 can be obtained having the positive electrode 1, the polymer electrolyte film 51 and the negative electrode 21 fixed to each other as shown in Fig. 17.

In order to improve safety of the non-aqueous electrolyte secondary battery 80 of the invention, an active material coated with a polymer may be used as the particulate active material to be used in the preparation of the positive electrode 1 or negative electrode 21. This is because the coverage of the surface of the particulate active material directly with a polymer makes it possible to reduce the direct contact area of active material with electrolyte solution.

The kind of the polymer with which the particulate active material is coated is not limited. For example, the same type of polymer as used at the foregoing porous polymer forming step may be used. The shape of the polymer to be used is not specifically limited. In practice, however, it is preferably porous. More preferably, the polymer becomes a porous polymer electrolyte as mentioned above after injection of electrolyte solution.

This is because the arrangement of such a porous polymer allows the diffusion of lithium ion through the electrolyte solution in the pores, making it possible to provide a non-aqueous electrolyte secondary battery having an excellent charge and discharge performance.

The particulate active material coated with a polymer means a particulate active material coated with a polymer on a part of the surface thereof. Accordingly, in the case
where the particulate active material is made of secondary particles, a polymer may be present in the gap between primary particles. The amount of the polymer with which the surface of the particulate active material is coated may be any value so far as the proportion of the polymer in the weight of the particulate active material coated with the polymer is not greater than 4 wt-%.

As a process for the preparation of the particulate active material coated with a polymer, the following process may be used. A process may be used which comprises directly drying an active material having a polymer solution to evaporate the solvent from the polymer. Alternatively, the desired particulate active material can be prepared by wet process mentioned above. In some detail, an active material having a polymer solution which a polymer is dissolved in a first solvent is dipped in a second solvent to extract the first solvent and hence render the polymer porous. Subsequently, the active material provided with the polymer is taken out from the bath of second solvent, and then dried. Alternatively, an active material is put in a polymer solution which a polymer is dissolved in a first solvent. Thereafter, a second solvent is added to the solution in order to extract the first solvent. The active material provided with a polymer thus rendered porous is taken out from the bath of the mix of polymer solution and second solvent, and then dried.

EXAMPLE 1

The present invention will be further described in the following examples.

At first, the following test was carried out to confirm whether a porous polymer electrolyte film is fixed to an electrode or not.

In this test, a poly(vinylidene fluoride) or vinylidene fluoride/hexafluoropropylene copolymer having a molecular weight of about 250,000 was used as a material of porous polymer. The strength which was required to separate a positive electrode and a negative electrode was measured under various conditions in the case where a porous polymer electrolyte film was interposed between the positive electrode and the negative electrode.

As for a positive electrode, a positive electrode compound layer which applied to one side of an aluminum foil contained 89 wt-% of particulate $LiNi_{0.83}Co_{0.17}O_2$, 5 wt-% of acetylene black as an electric conductor and 6 wt-% of PVdF as a binder. The porosity of the positive electrode compound layer was 70%.

As for a negative electrode, a negative electrode compound layer which applied to one side of a copper foil contained 90 wt-% of graphite as an active material and 10 wt-% of PVdF as a binder. The porosity of the negative electrode compound layer was 65%. The positive electrode and negative electrode thus prepared were pressed to adjust the porosity of the positive electrode compound layer and the negative electrode compound layer to 30%, respectively.

The porous polymer film was prepared as follows. A polymer solution having 20 wt-% of P(VdF/HFP) dissolved in NMP was applied to a glass plate by means of a doctor blade. A gap of the doctor blade was adjusted to 100 μm. Subsequently, the glass plate coated with the polymer solution was dipped in de-ionized water containing 75 wt-% of ethanol to prepare a porous polymer film. The film thus prepared had a porosity of 55% and a thickness of 25 μm.

The size of the positive electrode and the negative electrode were each predetermined to 20 mm x 20 mm. The positive electrode and the negative electrode were then laminated opposed to each other with the porous polymer film having a thickness of 25 μm provided interposed therebetween. The laminate thus prepared was then inserted into a battery case. The electricity-generating element in the battery case had a structure as shown in Figs. 16 and 17. An electrolyte solution comprising a 1 : 1 (by volume) mixture of ethylene carbonate (EC) and diethyl carbonate (DEC) containing 1 mol/L of $LiPF_6$ was then injected into the battery case. The battery was heated to a predetermined temperature in a water bath for 10 minutes, and then taken out from the water bath for the measurement of strength required to separate at least an electrode from the electrode laminate.

The measurement was conducted as follows. The electrolyte solution attached to the surface of the electrodes was removed. The surface of electrodes were washed with acetone, and then dried. A double-sided paper tape (Nicetack, produced by NICHIBAN CO.,LTD.) was then applied to the surface of the positive electrode and the negative electrode. A plastic block having a size of 20 mm x 20 mm x 30 mm was then attached to each side of the electrode laminate. With the upper plastic block fixed, these electrodes were then separated from each other by pulling the lower plastic block via a spring balance attached thereto. Thus, the load at which separation was made was determined.

The number of samples to be measured was 5 for each condition. The measurement was made with different polymer compositions and heating temperatures. In Table 1, P (Poor) indicates that all the five samples were separated at a load of 20 g/cm$^2$, F (Fair) indicates that 1 to 4 samples were separated at a load of 20 g/cm$^2$, and G (Good) indicates that none of the five samples were separated at a load of 20 g/cm$^2$.

Table 1

| Relationship between heating temperature and strength to separate an electrode from the electrode laminate | | | | | | | |
|---|---|---|---|---|---|---|---|
| Polymer composition mol-% of HFP | Heating temperature (°C) | | | | | | |
| | 60 | 70 | 80 | 90 | 100 | 110 | 120 |
| 0 | P | P | P | F | G | G | G |
| 5 | P | P | P | G | G | G | G |
| 10 | P | P | P | G | G | G | G |
| 15 | P | P | F | G | G | G | G |
| 20 | P | P | G | G | G | G | G |

Subsequently, the relationship between the porosity of porous polymer film and strength to separate at least an electrode from the electrode laminate was determined under the same conditions as in Table 1 except that a co-polymer containing 5 mol-% of HFP was used. The porosity of polymer layer can be adjusted by varying the concentration of the polymer solution or the mixing ratio of water and alcohol as second solvent. The porous polymer film having a porosity of 50% was obtained by dipping a polymer solution having 21% of a polymer dissolved in NMP into de-ionized water containing 75 wt-% of ethanol. Further, The porous polymer film having a porosity of 60% was obtained by dipping a polymer solution having 20% of a polymer dissolved in NMP into de-ionized water containing 50 wt-% of ethanol. Moreover, The porous polymer film having a porosity of 70% was obtained by dipping a polymer solution having 20% of a polymer dissolved in NMP into de-ionized water. The porous polymer film having a porosity of 80% was obtained by dipping a polymer solution having 14% of a polymer dissolved in NMP into de-ionized water.

The results are summarized in Table 2. The symbols used in Table 2 have the same meaning as those in Table 1.

Table 2

| % Porosity | Heating temperature (°C) | | | | | | |
|---|---|---|---|---|---|---|---|
| | 60 | 70 | 80 | 90 | 100 | 110 | 120 |
| 40 | P | P | F | G | G | G | G |
| 50 | P | P | P | G | G | G | G |
| 60 | P | P | P | G | G | G | G |
| 70 | P | P | P | G | G | G | G |
| 80 | P | P | P | G | G | G | G |

The relationship between the kind of electrolyte solution and the strength to separate at least an electrode from the electrode laminate was determined under the same conditions as in Table 1 except that a film having a porosity of 60% was used and a co-polymer containing 5 mol-% of HFP was used as the material of its film. The results are summarized in Table 3. The symbols used in Table 3 have the same meaning as those in Table 1.

Table 3

| Kind of electrolyte solution (ratio by volume) | Heating temperature (°C) | | | | | | |
|---|---|---|---|---|---|---|---|
| | 60 | 70 | 80 | 90 | 100 | 110 | 120 |
| EC + DEC (1 : 1) | P | P | P | G | G | G | G |
| EC + PC + DEC (1 : 1 : 1) | P | P | P | G | G | G | G |
| EC + MEC (1 : 1) | P | P | P | G | G | G | G |
| EC + DMC + DEC (1 : 1 : 1) | P | P | P | G | G | G | G |

As can be seen in Tables 1, 2 and 3, in the case where a poly(vinylidene fluoride) or vinylidene fluoride/ hexafluoropropylene copolymer was used as the material of porous polymer electrolyte film, it was confirmed that the positive electrode, the negative electrode and porous polymer electrolyte were fixed to each other by heating at a temperature not lower than 100°C.

## EXAMPLE 2

(Test on internal resistance and high rate discharge performance of non-aqueous electrolyte secondary battery)

Non-aqueous electrolyte secondary batteries were prepared in the following manner by using $LiNi_{0.83}Co_{0.17}O_2$ as a positive active material, graphite as a negative active material and a vinylidene fluoride/hexafluoropropylene co-polymer (P(VdF/HFP) containing 5 mol-% of hexafluoropropylene as a material of porous polymer. The performance of these non-aqueous electrolyte secondary batteries was then compared.

A positive electrode was prepared as follows. A mixture of 48.7 wt-% of particulate $LiNi_{0.83}Co_{0.17}O_2$, 2.7 wt-% of acetylene black, 3.3 wt-% of PVdF and 45.3 wt-% of NMP was applied to both sides of an aluminum foil, and then dried at a temperature of 90°C to evaporate NMP. The porosity of the positive electrode was 68%.

Subsequently, the unpressed positive electrode was dipped in a polymer solution having 6 wt-% of P(VdF/ HFP) dissolved in NMP so that the polymer solution was incorporated in the interior of the positive electrode. The positive electrode was then passed through the gap of rollers to remove the polymer solution attached to the surface of the positive electrode. The positive electrode was then dipped in de-ionized water so that a porous polymer was incorporated in the interior of the positive electrode.

The positive electrode was then pressed. The thickness of the positive electrode thus pressed was 160 μm. The weight of the active material in a unit area was 20 mg/cm$^2$.

A negative electrode was then prepared as follows. In some detail, a mixture of 81 wt-% of graphite, 9 wt-% of PVdF and 10 wt-% of NMP was applied to both sides of a copper foil having a thickness of 14 μm, and then dried at a temperature of 90°C to evaporate NMP. The porosity of the negative electrode was 70%.

Subsequently, the unpressed negative electrode was dipped in a polymer solution having 4 wt-% of P(VdF/ HFP) dissolved in NMP so that the polymer solution was incorporated in the interior of the negative electrode. The negative electrode was then passed through the gap of rollers to remove the polymer solution attached to the surface of the negative electrode. The negative electrode was then dipped in de-ionized water so that a porous polymer was incorporated in the interior of the negative electrode.

The negative electrode was then pressed. The thickness of the negative electrode thus pressed was 208 μm. The weight of the active material in a unit area was 14 mg/cm$^2$.

Thereafter, a polymer solution having 20 wt-% of P(VdF/HFP) dissolved in NMP was applied to the surface of the negative electrode. Since the polymer solution had a high viscosity, it penetrated little into the interior of the negative electrode. Subsequently, the negative electrode was passed through the gap of rollers to reduce the thickness of the polymer solution applied to the surface of the negative electrode to 100 μm. The negative electrode was then dipped in de-ionized water containing 75 wt-% of ethanol to form a porous polymer on the surface of the negative electrode. Thereafter, the negative electrode was vacuum-dried at a temperature of 100°C to remove residual water. The polymer layer formed on the surface of the negative electrode had a thickness of 24 μm.

The positive electrode and the negative electrode thus prepared were then laminated shown in Fig. 8B and wound to form a spirally wound element. The element thus formed was then inserted into an aluminum laminated case covered with resin. Thereafter, a 1 : 1 (by volume) mixture of ethylene carbonate and diethyl carbonate containing 1 M of LiPF6 was injected as an electrolyte solution into the battery case. The battery case was then sealed.

The injected amount of the electrolyte solution was 120% of the sum of the volume of pores in the positive electrode, the negative electrode and the porous polymer formed on the surface of the negative electrode. Thereafter, the battery was charged with a current of 160 mA for 2 hours. The battery was then charged with a current of 160 mA to 4.2 V. Subsequently, the battery was charged at a constant voltage of 4.2 V for 2 hours. The battery was then discharged with a current of 160 mA to 2.75 V. This procedure was conducted three times at room temperature. Thereafter, the non-aqueous electrolyte secondary battery was heated in a constant temperature bath while being clamped between iron plates so that the positive electrode, the porous polymer electrolyte and the negative electrode were fixed to each other. Subsequently, the sealing portion of the battery case was opened to remove gas which had been produced in the battery. The sealing portion of the battery was again sealed. Thus, a battery A1 of example, a battery A2 of example, a comparative battery a1 and a comparative battery a2 having a nominal capacity of 800 mAh were prepared. These batteries were the same in structure but different only in temperature at the heating step described later.

The porosity of an electrode is calculated from the density of the electrode compound calculated from the density of an active material, a binder and an electric conductor, the apparent volume calculated from the external size (length, width, thickness) of the electrode and the weight of the electrode. In other words, the porosity of electrode is defined by the following equation:

$$\text{Porosity} = (\text{Apparent volume} - (\text{weight of material/density of material}))/(\text{Apparent volume})$$

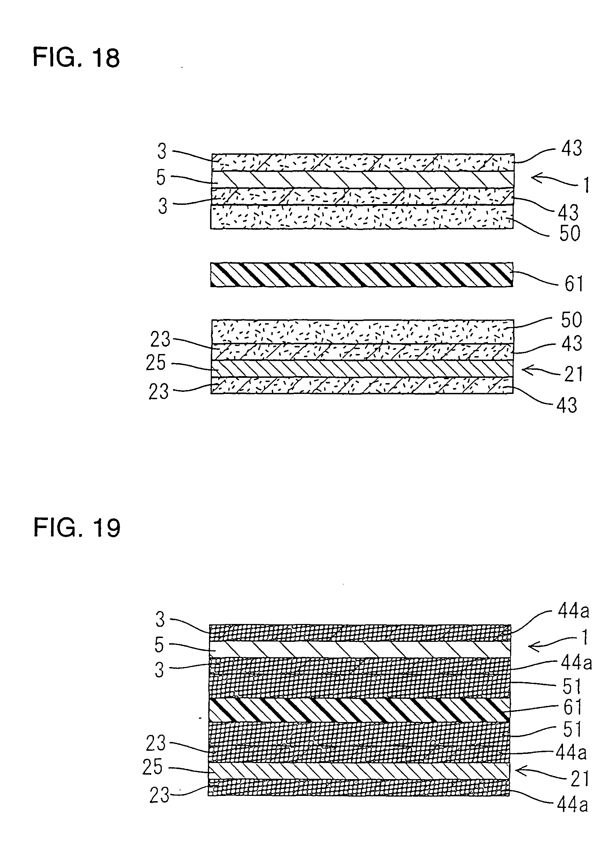

Subsequently, a battery B1 of example, a battery B2 of example, a comparative battery b1 and a comparative battery b2 were prepared. In order to prepare these batteries, a porous polymer was incorporated in the interior of a positive electrode and a negative electrode in the same manner as in Example A1. Thereafter, a porous polymer layer was formed on the surface of the negative electrode in the same manner as in Example A1. A thickness of the porous polymer layer prepared on the surface of the negative electrode was 10 μm. A porous polymer layer was also formed on the surface of the positive electrode in the same manner as the negative electrode. A thickness of the porous polymer layer prepared on the surface of the positive electrode was 10 μm. A microporous polyethylene separator was then interposed between the positive electrode and the negative electrode to prepare the batteries B1, B2, b1 and b2 (see Figs. 18 and 19).

The positive electrode and the negative electrode were laminated and wound with a microporous polyethylene separator 61 ( porosity: 40%; thickness: 25 μm) interposed therebetween to form a spirally-wound element. The spirally-wound element thus formed was then processed in the same manner as the battery A to fix the electricity-generating element. Thus, a battery B1 of example, a battery B2 of example, a comparative battery b1 and a comparative battery b2 having a nominal capacity of 800 mAh were prepared. These batteries were the same in structure but different only in temperature at the heating step described later.

Subsequently, batteries C1, C2, c1 and c2 were assembled by using a porous polymer film prepared separately of positive electrode and negative electrode. In some detail, the positive electrode and the negative electrode were prepared in the same manner as the battery A1 of example.

Subsequently, a polymer solution having 20 wt-% of P(VdF/HFP) dissolved in NMP was applied to a glass plate by means of a doctor blade. A gap of the doctor blade was 100 μm. The glass plate thus coated with a polymer solution was then dipped in de-ionized water containing 75 wt-% of ethanol to prepare a porous polymer film. The porous polymer film thus prepared had a porosity of 55% and a thickness of 25 μm.

The batteries C1, C2, c1 and c2 had no porous polymer incorporated in the interior of the electrodes because neither the positive electrode nor the negative electrode was dipped in a polymer solution having P(VdF/HFP) dissolved in NMP.

Subsequently, the positive electrode and the negative electrode were laminated and wound with the porous polymer film provided interposed therebetween as shown in Figs. 16 and 17 to form a spirally-wound element. The spirally-wound element thus formed was then inserted into an aluminum laminated case covered with resin to obtain a battery assembly. Thereafter, the battery was processed in the same manner as the battery A1 of example to fix the positive electrode, the negative electrode and the porous polymer electrolyte film provided interposed therebetween to each other. Thus, a battery C1 of example, a battery C2 of example, a comparative battery c1 and a comparative battery c2 having a nominal capacity of 800 mAh were prepared. Comparative batteries D, E and F were prepared as follows. The comparative battery D having a structure shown in Figs. 8B and 9 was prepared in the same manner as the battery A of example except that no heat treatment was conducted. The comparative battery E having a structure shown in Figs. 18 and 19 was prepared in the same manner as the battery B of example except that no heat treatment was conducted. The comparative battery F having a structure shown in Figs. 16 and 17 was prepared in the same manner as the battery C of example except that no heat treatment was conducted.

Subsequently, the effect of heat treatment temperature on internal resistance of the batteries A1, A2, B1, B2, C1 and C2 and the comparative batteries a1, a2, b1, b2, c1 and c2 was examined. The results are summarized in Table 4. For the measurement of internal resistance of battery, an ac impedance meter (frequency: 1 kHz) was used. The heat treatment from 60°C to 100°C was conducted in a water bath, and the heat treatment to 120°C was conducted in an oil bath.

Table 4

| Symbol | Temperature of heat treatment (°C) | Time of heat treatment (hr) | Internal resistance before heat treatment (m$\Omega$) | Internal resistance after heat treatment (m$\Omega$) |
|---|---|---|---|---|
| a1 | 60 | 48.0 | 120 | 146 |
| a2 | 80 | 48.0 | 119 | 108 |
| A1 | 100 | 0.25 | 120 | 69 |
| A2 | 120 | 0.25 | 120 | 68 |
| b1 | 60 | 48.0 | 140 | 168 |
| b2 | 80 | 48.0 | 138 | 121 |
| B1 | 100 | 0.25 | 142 | 74 |
| B2 | 120 | 0.25 | 141 | 74 |
| c1 | 60 | 48.0 | 89 | 102 |
| c2 | 80 | 48.0 | 92 | 82 |
| C1 | 100 | 0.25 | 94 | 64 |
| C2 | 120 | 0.25 | 90 | 65 |

The thermocouple was attached to the surface of the case to measure the temperature of the battery. As a result, when heat treatment was conducted at a temperature of 100°C, temperature of the battery was rose to 96°C after only 3 minutes, followed by substantial equilibrium. When heat treatment was conducted at a temperature of 120°C, temperature of the-battery was rose to 115°C after 5 minutes.

As can be seen in Table 4, the batteries A1, A2, B1, B2, C1 and C2 of example, which had been subjected to heat treatment at a temperature of not lower than 100°C, showed a drastic decrease of internal resistance from the initial value. , This demonstrates that the positive electrode, the negative electrode, and the porous polymer electrolyte are fixed to each other by a loss of the gap between each element.

Heating to a temperature of 120°C for a long period of time is dangerous because the resulting vaporization or decomposition of electrolyte solution and reaction of electrolyte solution with electrodes cause the production of gas. Accordingly, it is necessary that the optimum heating temperature and time are determined taking into account the melting point of the porous polymer electrolyte used wets or swells and the melting point of the electrolyte solution used.

Subsequently, the batteries A1, A2, B1, B2, C1 and C2 of example, the comparative batteries a1, a1, b1, b2, c1 and c2 and the comparative batteries D, E and F, which had not been subjected to heat treatment, were each disassembled. As a result, the various constituents were separated from each other in the comparative batteries a1, a2, b1, b2, c1 and c2, which had been subjected to heat treatment at 60°C and 80°C, and the comparative batteries D, E and F. On the contrary, the batteries A1, A2, B1, B2, C1 and C2, which had been subjected to heat treatment at a temperature of not lower than 100°C, were found to have the spirally-wound element coagulated. Thus, the positive electrode, the negative electrode and the porous polymer electrolyte were found to be fixed to each other, making it very difficult to separate the porous polymer electrolyte layer from the adjacent electrode.

The high rate discharge performance of these batteries will be described hereinafter. The batteries A2, B2 and C2 of example, which had been heat-treated at 120°C, and the comparative batteries D, E and F, which had not been heat-treated , were each charged with a current of 160 mA to 4.2 V, and then charged at a constant voltage of 4.2 V for 3 hours. These batteries were each then discharged with a current of 800 mA to 2.75 V.

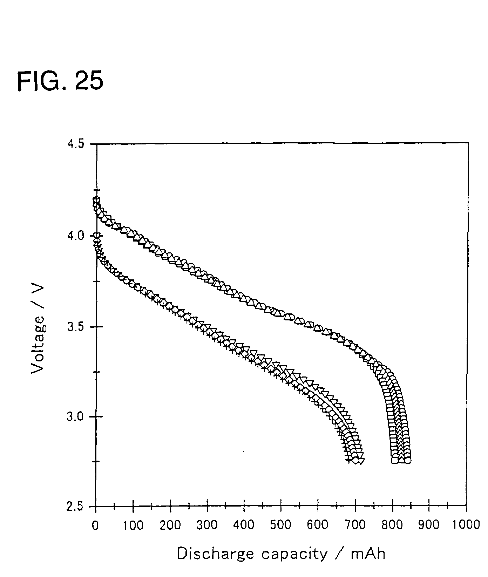

The resulting discharge curves are shown in Fig. 25. The discharge curve of the batteries A2, B2 and C2 of example and the comparative batteries D, E and F, which had not been subjected to heat treatment, are indicated by the symbols $\triangle$, $\square$, $\bigcirc$, $\lozenge$, + and $\triangledown$, respectively.

As can be seen in Fig. 25, the batteries A2, B2 and C2 of the invention showed a smaller drop of potential in the initial stage of discharge and a higher discharge capacity than the comparative batteries D, E and F, demonstrating that the present invention is extremely useful for the improvement of high rate discharge performance of the battery.

EXAMPLE 3

(Safety test)

A positive electrode was prepared in the same manner as the foregoing battery A1 of Example 2 except that lithium cobalt oxide was used as the positive active material.

Subsequently, a polymer solution having 8 wt-% of P(VdF/HFP) (HFP: 5 mol-%) dissolved in NMP was prepared. The foregoing positive electrode was then dipped in the polymer solution so that the polymer solution was retained in the interior of the positive electrode. The positive electrode was then passed through the gap of rollers to remove excess polymer solution that had been attached to the surface of the positive electrode. The positive electrode was then dipped in a 0.001 M aqueous solution of phosphoric acid (which can inhibit the corrosion of an aluminum foil as a current collector) to extract NMP. The positive electrode was taken out, dried at a temperature of 130°C, and then pressed. Thus, a positive electrode comprising a porous polymer provided in the interior thereof was prepared.

A negative electrode was prepared in the same manner as the battery A1 of example. Subsequently, a polymer solution having 4 wt-% of P(VdF/HFP) (HFP: 5 mol-%) dissolved in NMP was prepared. The foregoing negative electrode was dipped in the polymer solution so that the polymer solution was retained in the interior of the negative electrode. The negative electrode was then passed through the gap of rollers to remove the polymer solution attached to the surface of the negative electrode. The negative electrode was then dipped in de-ionized water to extract NMP. The negative electrode was taken out, dried at a temperature of 100°C, and then pressed. Thus, a negative electrode comprising a porous polymer provided in the interior thereof was prepared.

Subsequently, a polymer solution having 20 wt-% of P(VdF/HFP) dissolved in NMP was applied to a glass plate by means of a doctor blade. A gap of the doctor blade was 100 $\mu$m. Subsequently, the glass plate coated with the polymer solution was dipped in de-ionized water containing 75 wt-% of ethanol to prepare a porous polymer film. The film thus prepared had a porosity of 55% and a thickness of 25 $\mu$m.

The positive electrode 1 and the negative electrode 21 were laminated and wound with a porous polymer film 50 provided interposed therebetween as shown in Fig. 8A to form a spirally-wound element. The spirally-wound element thus formed was then inserted into an aluminum laminated case covered with resin. Thereafter, the battery was processed in the same manner as the foregoing battery A1 of example to fix the positive electrode, the negative electrode, and the porous polymer electrolyte film provided interposed between the positive electrode and the negative electrode to each other. Thus, a battery G of example with a nominal capacity of 600 mAh having a structure shown in Fig. 9 was prepared. A comparative battery H was prepared having the same structure as the battery G of example in the same manner as the battery G except that no heat treatment was conducted.

The safety of the battery G of example and the comparative battery H for overcharge were then examined. In some detail, these batteries were each charged with a current of 300 mA to 4.1 V, and then charged at a constant voltage of 4.1 V for 5 hours. Subsequently, these batteries were each discharged with a current of 300 mA to 2.75 V. Thereafter, these batteries were each overcharged with a current of 600 mA.

As a result, the comparative battery H showed a sudden rise of temperature causing fuming, ignition and rupture of battery case about 3 hours after the beginning of charge. On the contrary, the battery G of example showed no troubles but slight expansion of battery case even after 4 hours. It was thus confirmed that the battery G of example exhibits a high safety for overcharge. This is attributed to the following reason. In other words, when the battery is overcharged, the resulting decomposition of the electrolyte solution causes the production of gas. Since this reaction is an exothermic reaction, the temperature in the battery rises, causing the evaporation of unreacted electrolyte solution. Further, this exothermic reaction causes other chemical reactions succesively. As a result, the temperature in the battery further rises, accelerating the evaporation of the electrolyte solution. Moreover, some of these chemical reactions are accompanied by the production of gas. The gas thus produced tends to expand the laminated electricity-generating elements. The resulting force causes the electrodes to pierce the separator, causing shortcircuiting that leads to the passage of large amount of current and a sudden rise of temperature in the battery. This results in fuming, ignition and rupture of battery case. However, a positive electrode, a negative electrode and a porous polymer electrolyte film were fixed to each other in case of the battery G of example. In this arrangement, the buckling of the electrodes accompanying the production of gas can be inhibited. As a result, no shortcircuiting occurs even though overcharge is conducted. Thus, safety of the battery G is improved.

The electrodes and the porous polymer electrolyte were thought to be fixed to each other due to the rise of temperature in the battery in case of comparative battery H when overcharged. However, it is thought that the electrodes underwent buckling causing shortcircuiting before the fix of the positive electrode, the negative electrode and porous polymer electrolyte since the production of gas accompanying overcharging was sudden.

As mentioned above, the non-aqueous electrolyte secondary battery of the invention exhibits an improved high rate discharge performance. Further, the non-aqueous electrolyte secondary battery of the invention exhibits further improvement in safety for overcharge.

(Cycle test)

Batteries A3 and A4 of example were prepared in the same manner as the battery A1 of example except that the amount of the electrolyte solution was 120% and 90% of the sum of the volume of pores in the positive electrode, the porous polymer electrolyte and the negative electrode, respectively.

Batteries C3 and C4 were prepared in the same manner as the battery C1 of example except that the amount of the electrolyte solution was 120% and 90% of the sum of the volume of pores in the positive electrode, the porous polymer electrolyte and the negative electrode, respectively.

Batteries D3 and D4 were prepared in the same manner as the comparative battery D except that the amount of the electrolyte solution was 120% and 90% of the sum of the volume of pores in the positive electrode, the porous polymer electrolyte and the negative electrode, respectively.

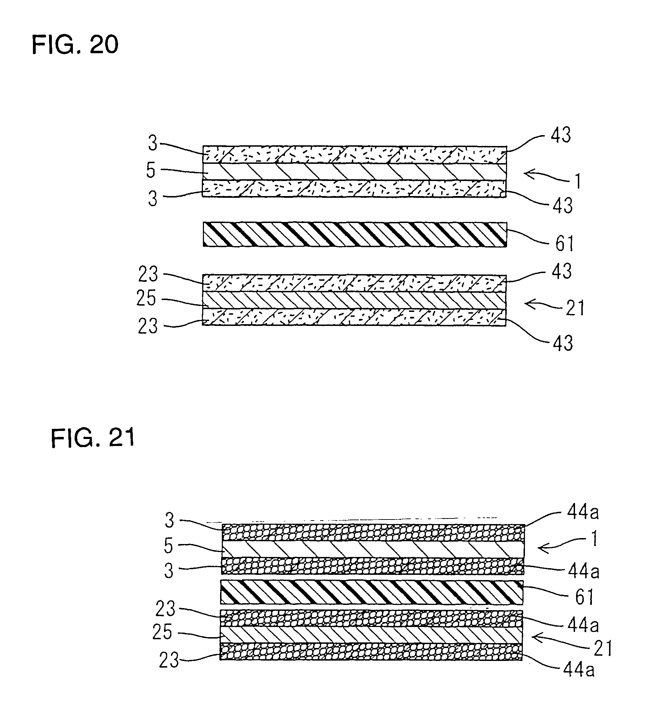

A comparative battery I was prepared free of porous polymer electrolyte on the surface of the electrodes and between the positive electrode and the negative electrode. A porous polymer electrolyte was incorporated only in the interior of the positive electrode and the negative electrode. And a microporous polyethylene separator was interposed between the positive electrode and the negative electrode as shown in Figs. 20 and 21. Comparative batteries I3 and I4 were prepared in the same manner as the comparative battery I. The amount of the electrolyte solution of the battery I3 and I4 was 120% and 90% of the sum of the volume of pores in the positive electrode, the microporous polyethylene separator and the negative electrode, respectively.

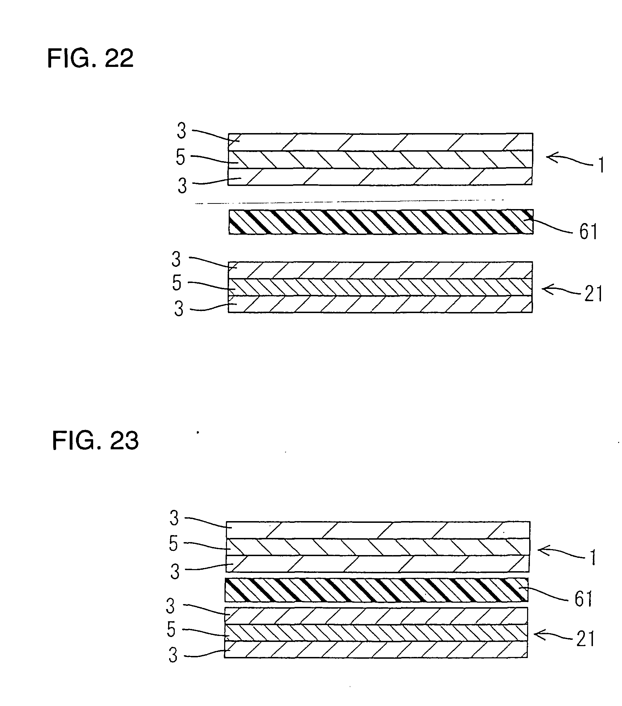

A comparative battery J was prepared free of porous polymer electrolyte on the surface of the electrodes and between the positive electrode and the negative electrode and also in the interior of the positive electrode and the negative electrode. A microporous polyethylene separator was interposed between the positive electrode and the negative electrode as shown in Figs. 22 and 23. Comparative batteries J3 and J4 were prepared in the same manner as the comparative battery J. The amount of the electrolyte solution of the battery J3 and J4 was 120% and 90% of the sum of the volume of pores in the positive electrode, the microporous polyethylene separator and the negative electrode, respectively.

Cycle life performance of these non-aqueous electrolyte secondary batteries was examined. In some detail, these non-aqueous electrolyte secondary batteries were each charged with a current of 400 mA to 4.2 V, and then charged at a constant voltage of 4.2 V. The total charging time was 5 hours. These non-aqueous electrolyte secondary batteries were each then discharged with a current of 800 mA to 2.75 V. This charge-discharge procedure was repeated 300 times. Retention of discharge capacity at 300th cycle to that at 1st cycle of these batteries were examined. The results are summarized in Table 5. The batteries A3 and C3 and the comparative batteries D3, I3 and J3, which have an electrolyte solution in an amount of 120% of the sum of the volume of pores in the elements, exhibited a high capacity retention. Among the batteries having an electrolyte solution in an amount of 90% of the sum of the volume of pores in the elements, the battery A4 of example exhibited a higher capacity retention and a better cycle life performance than the other batteries. As can be seen in the test results, by incorporating a porous polymer electrolyte in the interior of the electrodes, providing a porous polymer electrolyte between the positive electrode and the negative electrode, and fixing the positive electrode, the porous polymer electrolyte and the negative electrode to each other, the decrease of cycle life performance due to the reduction of the amount of the electrolyte solution can be drastically suppressed. This also means improvement of safety of the battery by the reduction of flammable electrolyte solution.

The comparison of the test results of the comparative batteries I3 and J3 shows that the comparative battery I3, which comprises a porous polymer electrolyte provided in the interior of the electrodes, exhibited a higher capacity retention than the battery J3. As can be seen in these results, the cycle-life performance of the battery can be improved by providing a porous polymer electrolyte in the interior of the electrodes.

The comparison of the test results of the batteries C3 and J3 shows that the battery C3, which a positive electrode, a porous polymer electrolyte and a negative electrode are fixed to each other, exhibited a higher capacity retention than the battery J3. As can be seen in these results, by fixing a positive electrode, a porous polymer electrolyte film and a negative electrode to each other, the cycle life performance of the battery can be improved.

The comparison of the test results of the comparative batteries I4 and J4 shows that by providing a porous polymer electrolyte in the interior of the electrodes, the cycle life performance of the battery can be improved somewhat even if the amount of the electrolyte solution is reduced.

The comparison of the test results of the batteries C4 and J4 shows that by fixing a positive electrode, a microporous polymer electrolyte and a negative electrode to each other, the cycle life performance of the battery can be improved somewhat even if the amount of the electrolyte solution is reduced.

Table 5

| Symbol | Injected amount (%) | % Capacity retention after 300th cycle |
|---|---|---|
| A3 | 120 | 92 |
| A4 | 90 | 90 |
| C3 | 120 | 91 |
| C4 | 90 | 60 |
| D3 | 120 | 85 |
| D4 | 90 | 63 |
| I3 | 120 | 89 |
| I4 | 90 | 63 |
| J3 | 120 | 80 |
| J4 | 90 | 54 |

While the invention has been described in detail and with reference to specific embodiments thereof, it will be apparent to one skilled in the art that various changes and modifications can be made therein without departing from the spirit and scope thereof.

This application is based on Japanese patent applications No. 2000-224468 filed on July 25, 2000, the entire contents thereof being hereby incorporated by reference.

**Claims**

1. A non-aqueous electrolyte secondary battery which comprises:

   (1) a positive electrode comprising a positive active material;
   (2) a negative electrode comprising a negative active material; and
   (3) a porous polymer electrolyte interposed between said positive electrode and said negative electrode,

   wherein said positive electrode, said negative electrode and said polymer electrolyte are fixed to each other.

2. The non-aqueous electrolyte secondary battery according to Claim 1, wherein at least one of said positive electrode and said negative electrode comprises therein a polymer which constitutes said polymer electrolyte.

3. The non-aqueous electrolyte secondary battery according to Claim 1, wherein said polymer electrolyte comprises at least one member selected from the group consisting of poly(vinylidene fluoride) and vinylidene fluoride/hexafluoropropylene copolymer.

4. A non-aqueous electrolyte secondary battery comprising the following elements:

(1) a positive electrode comprising a positive active material;

(2) a negative electrode comprising a negative active material; and

(3) a separator comprising a porous polymer electrolyte provided on both sides thereof, which is interposed between said positive electrode and said negative electrode,

wherein said positive electrode, said negative electrode and said polymer electrolyte are fixed to each other.

5. The non-aqueous electrolyte secondary battery according to Claim 4, wherein at least one of said positive electrode and said negative electrode comprises therein a polymer which constitutes said polymer electrolyte.

6. The non-aqueous electrolyte secondary battery according to Claim 4, wherein said polymer electrolyte comprises at least one member selected from the group consisting of poly(vinylidene fluoride) and vinylidene fluoride/hexafluoropropylene copolymer.

7. A process for the preparation of a non-aqueous electrolyte secondary battery comprising:

(1) an electricity-generating element assembly step of laminating a positive electrode comprising a positive active material and a negative electrode comprising a negative active material with a porous polymer interposed therebetween to form an electricity-generating element;

(2) an electrolyte injecting step of injecting an electrolyte into said electricity-generating element to render said porous polymer to be a polymer electrolyte; and

(3) a heating step of heating said polymer electrolyte of said electricity-generating element to melt said polymer electrolyte.

8. A process for the preparation of a non-aqueous electrolyte secondary battery comprising:

(1) a polymer solution impregnating step of dipping at least one of a positive electrode comprising a positive active material and a negative electrode comprising a negative active material in a solution having a polymer dissolved in a first solvent to impregnate at least one of said positive electrode and said negative electrode with said polymer solution;

(2) a porous polymer forming step of dipping said positive electrode and/or said negative electrode in a second solvent compatible with said first solvent to replace said first solvent by said second solvent and then removing said second solvent to form a porous polymer;

(3) an electricity-generating element assembly step of laminating said positive electrode and said negative electrode with said porous polymer interposed therebetween to form an electricity-generating element;

(4) an electrolyte injecting step of injecting an electrolyte into said electricity-generating element to render said porous polymer to be a polymer electrolyte; and

(5) a heating step of heating said polymer electrolyte of said electricity-generating element to melt said polymer electrolyte.

9. A process for the preparation of a non-aqueous electrolyte secondary battery comprising:

(1) a polymer solution impregnating step of dipping at least one of a positive electrode comprising a positive active material and a negative electrode comprising a negative active material in a solution having a polymer dissolved in a first solvent to impregnate at least one of said positive electrode and said negative electrode with said polymer solution;

(2) a polymer solution removing step of removing said polymer solution attached to the surface of at least one of said positive electrode and said negative electrode;

(3) a porous polymer forming step of dipping at least one of said positive electrode and said negative electrode in a second solvent compatible with said first solvent to replace said first solvent by said second solvent and then removing said second solvent to form a porous polymer;

(4) a press step of pressing said positive electrode and/or said negative electrode having said porous polymer;

(5) an electricity-generating element assembly step of laminating said positive electrode and said negative electrode with said porous polymer film interposed therebetween to form an electricity-generating element;

(6) an electrolyte injecting step of injecting an electrolyte into said electricity-generating element to render said porous polymer to be a polymer electrolyte; and

(7) a heating step of heating said polymer electrolyte of said electricity-generating element to melt said polymer electrolyte.

10. The process for the preparation of a non-aqueous electrolyte secondary battery according to Claim 7, wherein said electricity-generating element assembly step comprises laminating said positive electrode and said negative electrode with a porous polymer film which is different from said porous polymer interposed therebetween to form an electricity-generating element having said porous polymer film interposed between said positive electrode and said negative electrode.

11. The process for the preparation of a non-aqueous electrolyte secondary battery according to Claim 8, wherein said electricity-generating element assembly step comprises laminating said positive electrode and said negative electrode with a porous polymer film which is different from said porous polymer interposed therebetween to form an electricity-generating element having said porous polymer film interposed between said positive electrode and said negative electrode.

12. The process for the preparation of a non-aqueous electrolyte secondary battery according to Claim 7, wherein said electricity-generating element assembly step comprises laminating said positive electrode and said negative electrode with a separator interposed therebetween to form an electricity-generating element having said separator interposed between said positive electrode and said negative electrode with a porous polymer interposed therebetween.

13. The process for the preparation of a non-aqueous electrolyte secondary battery according to Claim 8, wherein said electricity-generating element assembly step comprises laminating said positive electrode and said negative electrode with a separator interposed therebetween to form an electricity-generating element having said separator interposed between said positive electrode and said negative electrode with a porous polymer interposed therebetween.

14. The process for the preparation of a non-aqueous electrolyte secondary battery according to Claim 9, wherein said electricity-generating element assembly step comprises laminating said positive electrode and said negative electrode with a separator interposed therebetween to form an electricity-generating element having said separator interposed between said positive electrode and said negative electrode with a porous polymer interposed therebetween.

FIG. 1

FIG. 2

FIG. 3

FIG. 4

FIG. 5

FIG. 6

FIG. 7

FIG. 8A

FIG. 8B

EP 1 176 660 A2

FIG. 9

FIG. 10

FIG. 11

FIG. 12

FIG. 13

FIG. 14

FIG. 15

FIG. 16

3
5
3
1

50

23
25
23
21

FIG. 17

3
5
3
1
51
23
25
23
21

FIG. 18

3 — 43
5 — 1
3 — 43
— 50

— 61

— 50
23 — 43
25 — 21
23 — 43

FIG. 19

3 — 44a
5 — 1
3 — 44a
— 51
— 61
— 51
23 — 44a
25 — 21
23 — 44a

FIG. 20

FIG. 21

FIG. 22

FIG. 23

FIG. 24

## FIG. 25